# EUROPÄISCHE PATENTSCHRIFT

(11) **EP 2 613 968 B1**
(45) Veröffentlichungstag und Bekanntmachung des Hinweises auf die Patenterteilung: **15.03.2017**
(21) Anmeldenummer: 11754671.3
(22) Anmeldetag: 09.09.2011
(51) Int. Cl.: B60N 2/48

(54) **KOPFSTÜTZE FÜR EINEN FAHRZEUGSITZ**
HEADREST FOR A VEHICLE SEAT
APPUIE-TÊTE POUR UN SIÈGE DE VÉHICULE

(30) Priorität: 11.09.2010 DE 102010045128
(43) Veröffentlichungstag der Anmeldung: 17.07.2013
(73) Patentinhaber: Johnson Controls GmbH, 51399 Burscheid (DE)
(72) Erfinder: REZBARIK, Miroslav, 91101 Trencin (SK); MARTINKA, Michal, 91501 Nove Mesto n. V. (SK); JAKUBEC, Ivan, 91701 Trnava (SK)
(74) Vertreter: Finger, Catrin
(86) Internationale Anmeldenummer: PCT/EP2011/065636
(87) Internationale Veröffentlichungsnummer: WO 2012/032152

(56) Entgegenhaltungen:
- DE-A1-102010 003 664
- JP-A- 2006 306 251
- US-A1- 2008 036 263

## Beschreibung

Die Erfindung betrifft eine Kopfstütze für einen Fahrzeugsitz nach den Merkmalen des Oberbegriffs des Anspruchs 1.

Im Stand der Technik beschreibt die DE 10 2004 034 158 A1 eine Kopfstütze für einen Sitz, insbesondere Kraftfahrzeugsitz, die an einer Sitzlehne angeordnet ist und Mittel aufweist, durch die ein Versenken der Kopfstütze aus einer Gebrauchsstellung in eine Nichtgebrauchsstellung ausführbar ist. In der Nichtgebrauchsstellung wird eine freie Sicht eines Insassen nach hinten ermöglicht, dabei ist die Kopfstütze in die Nichtgebrauchsstellung in eine versenkte Position vor die Sitzlehne verlagerbar und bildet dort eine Störkontur aus.

Die US 2005 0168 038 A1 beschreibt eine Kopfstütze für einen Fahrzeugsitz, welche eine invertierte L-Form aufweist.

Die JP 2007 082 616 A beschreibt einen Fahrzeugsitz mit einer Kopfstützenanordnung und einer zugehörigen Höhenverstellung.

Die DE 10 2010 003 664 A1 beschreibt eine Sitzanordnung mit einer Sitzlehne, einer Stützsäule, die sich von der Sitzlehne aus erstreckt, und einer Kopflehne, die schwenkbar an der Stützsäule angeordnet ist. Die Kopflehne hat einen unteren Kopflehnenabschnitt, einen oberen Kopflehnenabschnitt, der sich von dem unteren Kopflehnenabschnitt aus erstreckt, und eine Scharnierschelle, die die Kopflehne schwenkbar mit der Stützsäule verbindet. Die Kopflehne wird am Schwenken um eine Drehachse in einer ersten Drehrichtung herum gehindert, wenn der untere Kopflehnenabschnitt mit der Stützsäule in Eingriff ist.

Darüber hinaus ist aus der JP 2006 306251 A1 eine Kopfstütze mit einem Halteelement nach dem Oberbegriff des Anspruchs 1 bekannt.

Aufgabe der vorliegenden Erfindung ist es, eine verbesserte, insbesondere leichter bedienbare und komfortablere Kopfstütze für einen Fahrzeugsitz anzugeben.

Bevorzugte Ausgestaltungen und Weiterbildungen der Erfindung sind in den abhängigen Ansprüchen angegeben.

Die Aufgabe wird mit einer Kopfstütze für einen Fahrzeugsitz mit den Merkmalen des Anspruchs 1 gelöst, wobei die Kopfstütze an einer Sitzlehne des Fahrzeugsitzes derart höhenverstellbar angeordnet ist, dass sie von einer Nichtgebrauchsposition in eine Gebrauchsposition verstellbar ist. Erfindungsgemäß ist die Kopfstütze neigungsverstellbar an einem Halteelement angeordnet, welches aus einem u-förmigen Rohrabschnitt gebildet ist, dessen waagerecht angeordneter Abschnitt die Drehachse der Kopfstütze bildet, wobei Kopfstütze und Halteelement derart mit einem Federelement gekoppelt sind, dass die Kopfstütze mit einer Vorspannkraft des Federelements beaufschlagt ist. Die Vorspannkraft rotiert ein unteres Ende der Kopfstütze bei einem Überführen der Kopfstütze von der Nichtgebrauchsposition in die Gebrauchsposition automatisch in Richtung des Halteelements. Dadurch ist eine Vorderseite der Kopfstütze in der Gebrauchsposition vorteilhafterweise senkrecht oder nahezu senkrecht ausgerichtet. Somit ist ein Kontakt des unteren Endes der Kopfstütze mit einem Torso des Sitzenden sicher vermieden und ein Sitzkomfort ist verbessert.

Besonders vorteilhafterweise werden mit der erfindungsgemäßen Kopfstütze alle gesetzlichen Anforderungen erfüllt.

Das Halteelement ist erfindungsgemäß aus einem u-förmigen Rohrabschnitt gebildet, dessen waagerecht angeordneter Abschnitt die Drehachse der Kopfstütze bildet. Somit sind auf einfache Weise mehrere Funktionen in einem Bauteil integrierbar. Der waagerecht angeordnete Abschnitt der Kopfstütze bildet die Drehachse und die senkrechten Abschnitte bilden die Höhenverstellung der Kopfstütze.

Im Halteelement ist erfindungsgemäß beidseitig im Bereich von Verrundungen, die den Übergang zwischen waagerecht angeordnetem Abschnitt und senkrechten Abschnitten bilden, jeweils eine Aussparung angeordnet. In diesen Aussparungen sind die Federenden des Federelements vorteilhafterweise werkzeuglos anordenbar.

Das Federelement ist vorteilhaft als doppelte Drehfeder ausgebildet. Eine solche Drehfeder ist eine Schraubenfeder, die um ihre Achse auf Torsion beansprucht wird. Zweckmäßigerweise ist mittig zwischen zwei Drehfederabschnitten des Federelements ein Federschenkel angeordnet, welcher mit beiden Drehfederabschnitten gekoppelt ist.

An der jeweiligen Außenseite der Drehfederabschnitte ist bevorzugt jeweils ein Federende angeordnet, wobei die Federenden korrespondierend zu den Aussparungen im Halteelement ausgeformt sind.

Einer bevorzugten Ausbildung der Erfindung zufolge ist ein Kopfstützengestell mittels einer Klammer schwenkbar am Halteelement angeordnet, wobei die Klammer das Halteelement mit ihrem geschlossenen Abschnitt umschlingt und mit einer Schraube am Kopfstützengestell befestigt ist. Somit ist auf einfache Weise eine Neigungsverstellung der Kopfstütze mit einer geringen Bauteilanzahl und dem Halteelement als Drehachse ermöglicht.

An der Rückseite des Kopfstützengestells ist bevorzugt ein Abdeckelement angeordnet, wobei in einem oberen Bereich des Abdeckelements eine Haltenase ausgeformt ist und in einem unteren Bereich des Abdeckelements ein Stift und zwei Rastnasen ausgeformt sind.

Besonders vorteilhafterweise ist das Abdeckelement mittels der Haltenase, dem Stift und den Rastnasen werkzeuglos am Kopfstützengestell montierbar.

Die Kopfstütze weist bevorzugt einen L-förmigen Querschnitt auf, wobei das Halteelement am oberen Ende der Kopfstütze schwenkbar mit dieser gekoppelt ist.

Ein unterer Bereich der Kopfstütze ragt vorteilhafterweise in Nichtgebrauchsposition signifikant über eine Vorderkante der Sitzlehne hinaus, so dass für einen Sitzinsassen eine Störstruktur ausgebildet ist, welche ihn dazu veranlasst, die Kopfstütze in Gebrauchsposition zu überführen. Dabei ist die Unterkante der Kopfstütze in Gebrauchsposition oberhalb einer Oberkante der Sitzlehne angeordnet, so dass ein Sitzinsasse mittels der Kopfstütze und deren Einstellung vor Verletzungen geschützt ist.

Ausführungsbeispiele der Erfindung werden im Folgenden anhand von Zeichnungen näher erläutert.

Dabei zeigen:
- Fig. 1: schematisch eine Seitenansicht eines Fahrzeugsitzes mit einer Kopfstütze in Nichtgebrauchsposition,
- Fig. 2: schematisch eine Seitenansicht eines Fahrzeugsitzes mit einer Kopfstütze in Gebrauchsposition,
- Fig. 3: schematisch eine Explosionsdarstellung der Einzelteile der Kopfstütze,
- Fig. 4: schematisch das Halteelement mit daran montiertem Federelement,
- Fig. 5: schematisch das Halteelement mit daran montiertem Kopfstützengestell,
- Fig. 6: schematisch das Kopfstützengestell mit daran montiertem Abdeckelement,
- Fig. 7: schematisch eine Detailansicht der Haltenase des Abdeckelements,
- Fig. 8: schematisch eine Detailansicht der Rastnasen und des Stifts des Abdeckelements und
- Fig. 9: schematisch eine Seitenansicht der Kopfstütze.

Einander entsprechende Teile sind in allen Zeichnungen mit den gleichen Bezugszeichen versehen.

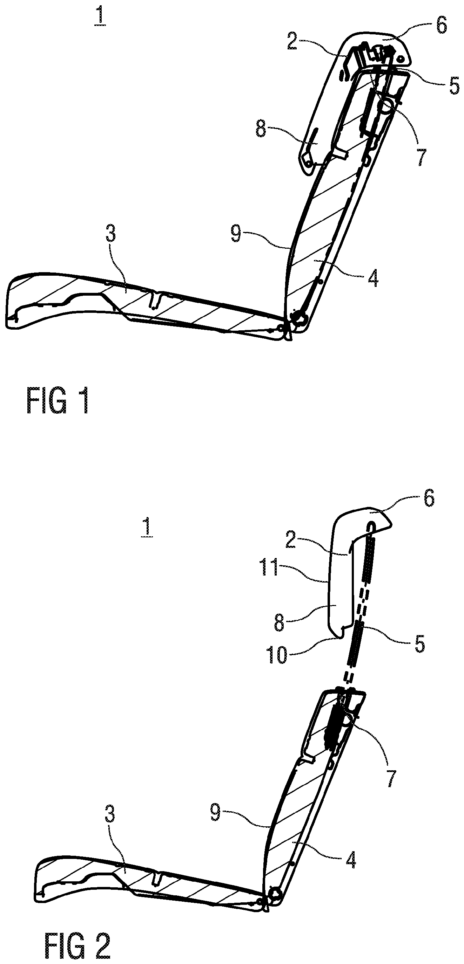

In Figur 1 ist schematisch eine Seitenansicht eines Fahrzeugsitzes 1 mit einer Kopfstütze 2 in Nichtgebrauchsposition dargestellt.

Ein solcher Fahrzeugsitz 1 umfasst zumindest eine Sitzfläche 3 und eine Sitzlehne 4. Die Kopfstütze 2 ist am oberen Ende der Sitzlehne 4 angeordnet. In Nichtgebrauchsposition ist die Kopfstütze 2 in der niedrigsten Position angeordnet, d.h. ein Halteelement 5, welches eine Höhenverstellung der Kopfstütze 2 ermöglicht, ist nahezu vollständig in die Sitzlehne 4 hineingeschoben. Diese Nichtgebrauchsposition der Kopfstütze 2 ermöglicht es, einen Sichtbereich des Fahrers zu erweitern, wenn der Fahrzeugsitz 1 nicht belegt ist.

In Seitenansicht betrachtet ist die Kopfstütze 2 L-förmig ausgebildet, wobei das Halteelement 5 am oberen Ende 6 der Kopfstütze 2 mit dieser schwenkbar gekoppelt ist. In der Nichtgebrauchsposition ist das obere Ende 6 der Kopfstütze 2 an einer Oberkante 7 der Sitzlehne 4 anliegend angeordnet. Daraus resultierend ist der untere Bereich 8 der Kopfstütze 2 an einer Vorderkante 9 der Sitzlehne 4 anliegend angeordnet.

Die Kopfstütze 2 ist derart ausgeformt, dass der untere Bereich 8 der Kopfstütze 2 in Nichtgebrauchsposition signifikant über die Vorderkante 9 der Sitzlehne 4 hinausragt. Daraus resultiert eine sehr unbequeme Sitzposition, so lange die Kopfstütze 2 in Nichtgebrauchsposition angeordnet ist. Somit muss die Kopfstütze 2 zur bequemen Nutzung des Fahrzeugsitzes 1 von der Nichtgebrauchsposition in die Gebrauchsposition verstellt werden.

In Figur 2 ist schematisch eine Seitenansicht des Fahrzeugsitzes 1 mit der Kopfstütze 2 in Gebrauchsposition dargestellt.

In Gebrauchsposition ist die Kopfstütze 2 mit dem Halteelement 5 derart aus der Sitzlehne 4 herausgezogen, dass eine Unterkante 10 der Kopfstütze 2 oberhalb der Oberkante 7 der Sitzlehne 4 angeordnet ist. Erfindungsgemäß wird der untere Bereich 8 der Kopfstütze 2 in Gebrauchsposition automatisch in Richtung des Halteelements 5 rotiert, bis bevorzugt der untere Bereich 8 der Kopfstütze 2 am Halteelement 5 anliegt.

Eine in Nichtgebrauchsposition parallel zur Vorderkante 9 der Sitzlehne 4 ausgerichtete Vorderseite 11 der Kopfstütze 2 ist in der Gebrauchsposition senkrecht oder nahezu senkrecht ausgerichtet.

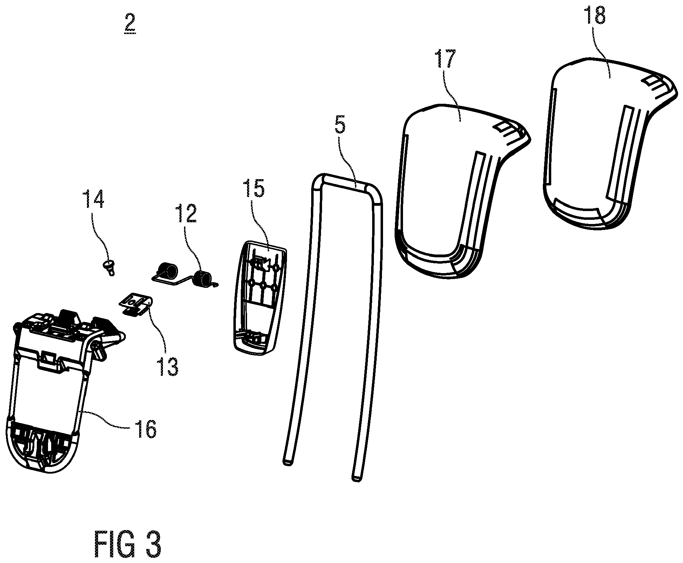

In Figur 3 ist schematisch eine Explosionsdarstellung der Einzelteile der Kopfstütze 2 dargestellt.

Die Kopfstütze 2 umfasst zumindest das Halteelement 5, ein Federelement 12, eine Klammer 13, eine Schraube 14, ein Abdeckelement 15, ein Kopfstützengestell 16, ein Polster 17 und einen Polsterbezug 18.

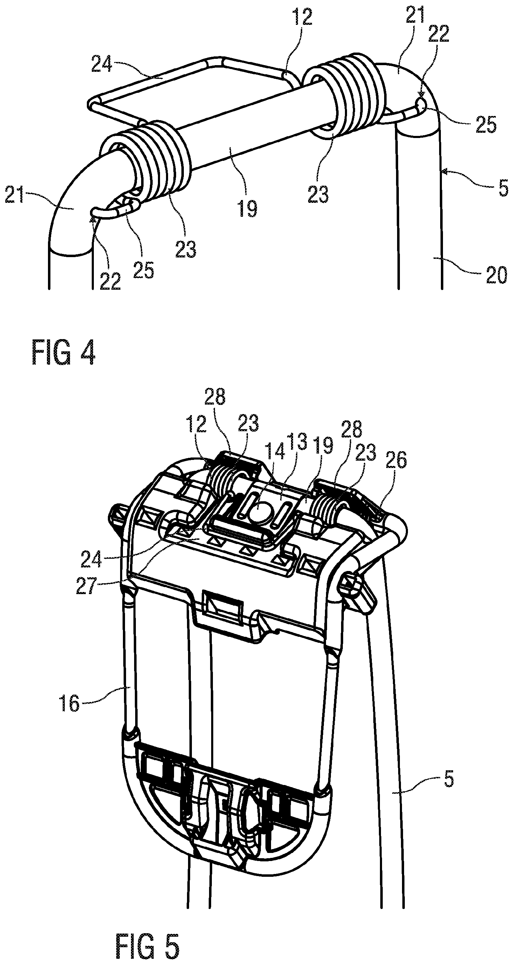

In Figur 4 ist schematisch das Halteelement 5 mit daran montiertem Federelement 12 dargestellt.

Das Halteelement 5 ist vorzugsweise aus einem u-förmigen Rohrabschnitt mit rundem Querschnitt gebildet, dessen waagerecht angeordneter Abschnitt 19 die Drehachse der Kopfstütze 2 bildet, während die senkrechten Abschnitte 20 die Höhenverstellung der Kopfstütze 2 ermöglichen. Im Halteelement 5 ist beidseitig im Bereich der Verrundungen 21 jeweils eine runde Aussparung 22 angeordnet, welche sich rechtwinklig zur Drehachse der Kopfstütze 2 erstreckt.

Das Federelement 12 ist als doppelte Drehfeder ausgebildet, die als Schraubenfeder um ihre Achse auf Torsion beansprucht wird.

Mittig zwischen den beiden Drehfederabschnitten 23 des Federelements 12 ist ein Federschenkel 24 angeordnet, welcher mit beiden Drehfederabschnitten 23 gekoppelt ist. An der jeweiligen Außenseite der Drehfederabschnitte 23 ist jeweils ein Federende 25 angeordnet, wobei die Federenden 25 korrespondierend zu den Aussparungen 22 ausgeformt sind und in diese eingreifen.

Beim Zusammenbau der Kopfstütze 2 sind die Federenden 25 des Federelements 12 in den runden Aussparungen 22 des Halteelements 5 werkzeuglos anordenbar.

In Figur 5 ist schematisch das Halteelement 5 mit daran montiertem Kopfstützengestell 16 dargestellt.

Das Kopfstützengestell 16 weist einen nutenförmigen Abschnitt 26 auf, welcher korrespondierend zum waagerechten Abschnitt 19 des Halteelements 5 ausgeformt ist und in welchem der waagerechte Abschnitt 19 des Halteelements 5 während des Betriebs der Kopfstütze 2 angeordnet ist.

Im Bereich der Oberseite der Kopfstützengestells 16 ist eine Fläche 27 ausgeformt, an der der Federschenkel 24 während des Betriebs der Kopfstütze 2 angeordnet ist. Daraus resultierend wirkt die Torsionskraft des vorgespannten Federelements 12 auf die Fläche 27, das Kopfstützengestell 16 und die gesamte Kopfstütze 2 ein.

Im Bereich des Federschenkels 24, somit zwischen den beiden Drehfederabschnitten 23 des Federelements 12 ist eine u-förmige Klammer 13 angeordnet.

Das Kopfstützengestell 16 ist mittels dieser Klammer 13 schwenkbar am Haltelement 5 angeordnet, wobei die Klammer 13 das Halteelement 5 mit ihrem geschlossenen Abschnitt umschlingt und mit der Schraube 14 am Kopfstützengestell 16 befestigt ist.

Im Bereich der Drehfederabschnitte 23 des Federelements 12 sind am Kopfstützengestell 16 Schutzabdeckungen 28 angeformt, welche einen Kontakt und einen daraus resultierenden Verschleiß des Polsters 17 der Kopfstütze 2 mit den Drehfederabschnitten 23 verhindern.

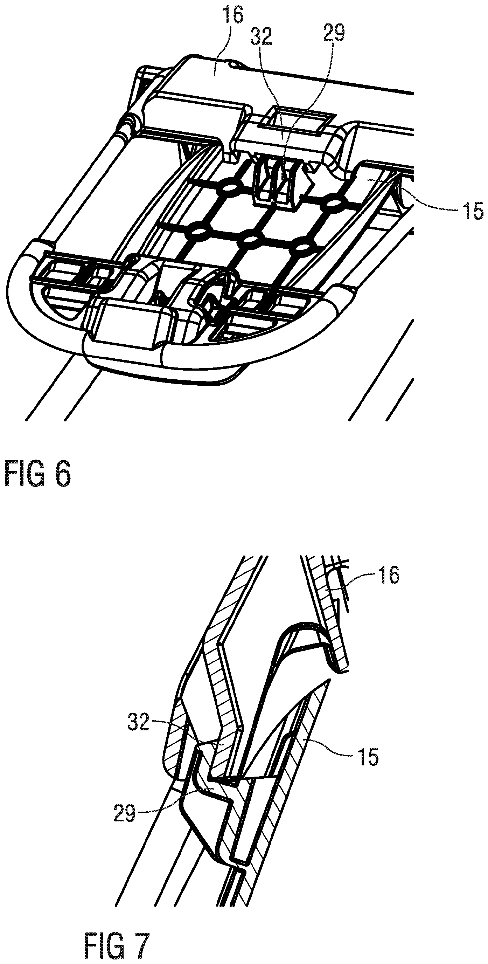

In Figur 6 ist schematisch das Kopfstützengestell 16 mit daran montiertem Abdeckelement 15 dargestellt.

Das Abdeckelement 15 umfasst zumindest eine obere Haltenase 29 und einen unteren Stift 30 sowie zwei Rastnasen 31.

In Figur 7 ist schematisch eine Detailansicht der oberen Haltenase 29 des Abdeckelements 15 dargestellt.

Diese Haltenase 29 ist hakenförmig ausgebildet und an einem korrespondierend ausgeformten Abschnitt 32 des Kopfstützengestells 16 angeordnet.

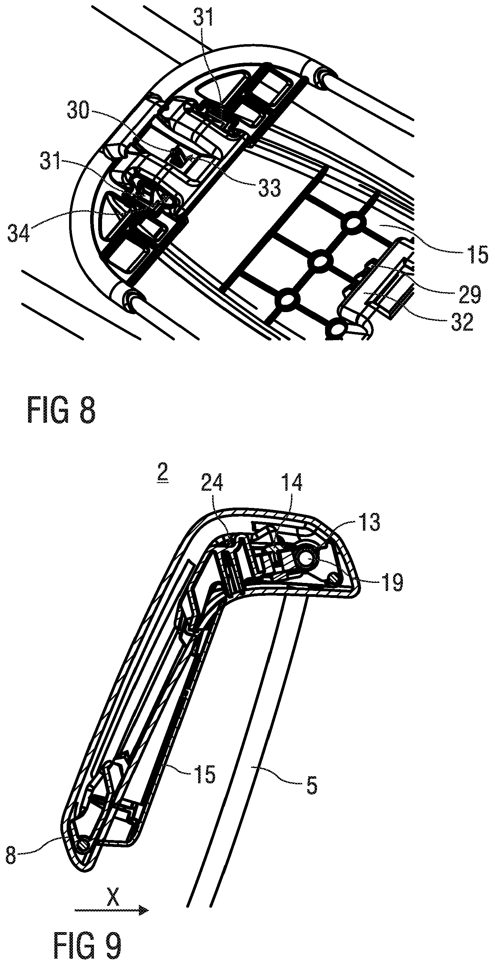

In Figur 8 ist schematisch eine Detailansicht der Rastnasen 31 und des Stifts 30 des Abdeckelements 15 dargestellt.

Der Stift 30 ist im unteren Bereich des Abdeckelements 15 mittig angeordnet und korrespondierend zu einer Führungsöffnung 33 im Kopfstützengestell 16 ausgeformt.

Die Rastnasen 31 sind beidseitig des Stifts 30 angeordnet und greifen in korrespondierende Ausformungen 34 im Kopfstützengestell 16 ein.

Das Abdeckelement 15 dient dazu, eine Rückseite der Kopfstütze 2 abzudecken. Mittels einer unterschiedlichen Dicke des Abdeckelements 15 ist beeinflussbar, wie weit der untere Bereich 8 der Kopfstütze 2 in Nichtgebrauchsposition über die Vorderkante 9 der Sitzlehne 4 hinausragt und wie stark die daraus resultierende Störkontur ausgebildet ist.

Ist das Abdeckelement 15 beispielsweise flach ausgebildet, lässt sich nur eine flache Störkontur ausbilden. Ist das Abdeckelement 15 sehr dick ausgebildet, lässt sich eine starke, sehr unbequeme Störkontur ausbilden.

In Figur 9 ist schematisch eine Seitenansicht der Kopfstütze 2 dargestellt.

Der waagerecht angeordnete Abschnitt 19 des Halteelements 5 ist im nutenförmigen Abschnitt 26 des Kopfstützengestells 16 angeordnet und mittels der Klammer 13 schwenkbar befestigt. Durch den Federschenkel 24 wirkt die Vorspannkraft des Federelements 12 auf die Oberseite und insbesondere die Fläche 27 des Kopfstützengestells 16. Die Vorspannkraft des Federelements 12 bewirkt eine Rotation der Kopfstütze 2 um den waagerecht angeordneten Abschnitt 19 des Halteelements 5 als Drehachse. Daraus resultierend wird der untere Bereich 8 der Kopfstütze 2 derart in Richtung X des Halteelements 5 rotiert, bis der untere Bereich 8 der Kopfstütze 2 am Halteelement 5 anliegt.

### Bezugszeichenliste

- 1: Fahrzeugsitz
- 2: Kopfstütze
- 3: Sitzfläche
- 4: Sitzlehne
- 5: Halteelement
- 6: oberes Ende
- 7: Oberkante
- 8: unterer Bereich
- 9: Vorderkante
- 10: Unterkante
- 11: Vorderseite
- 12: Federelement
- 13: Klammer
- 14: Schraube
- 15: Abdeckelement
- 16: Kopfstützengestell
- 17: Polster
- 18: Polsterbezug
- 19: waagerechter Abschnitt
- 20: senkrechter Abschnitt
- 21: Verrundung
- 22: Aussparung
- 23: Drehfederabschnitt
- 24: Federschenkel
- 25: Federende
- 26: nutenförmiger Abschnitt
- 27: Fläche
- 28: Schutzabdeckung
- 29: obere Haltenase
- 30: Stift
- 31: Rastnase
- 32: Abschnitt
- 33: Führungsöffnung
- 34: Ausformung

## Patentansprüche

1. Kopfstütze (2) mit einem Halteelement (5) für einen Fahrzeugsitz (1), wobei die Kopfstütze (2) an einer Sitzlehne (4) des Fahrzeugsitzes (1) derart höhenverstellbar angeordnet ist, dass sie von einer Nichtgebrauchsposition in eine Gebrauchsposition verstellbar ist, wobei die Kopfstütze (2) neigungsverstellbar an dem Halteelement (5) angeordnet ist, welches aus einem u-förmigen Rohrabschnitt gebildet ist, dessen waagerecht angeordneter Abschnitt (19) die Drehachse der Kopfstütze (2) bildet, wobei Kopfstütze (2) und Halteelement (5) derart mittels eines Federelements (12) gekoppelt sind, dass die Kopfstütze (2) mit einer Vorspannkraft des Federelements (12) beaufschlagt ist und die derart erzeugte Vorspannkraft eine Unterkante (10) der Kopfstütze (2) bei einem Überführen der Kopfstütze (2) von der Nichtgebrauchsposition in die Gebrauchsposition automatisch in Richtung des Halteelements (5) rotiert, **dadurch gekennzeichnet, dass** das Federelement (12) abschnittsweise in eine jeweils beidseitig im Bereich von Verrundungen (21) zwischen dem waagrecht angeordneten Abschnitt (19) und senkrechten Abschnitten (20) des Halteelements (5) angeordnete Aussparung (22) eingreift.

2. Kopfstütze (2) nach Anspruch 1,
**dadurch gekennzeichnet, dass** das Federelement (12) als doppelte Drehfeder ausgebildet ist.

3. Kopfstütze (2) nach Anspruch 1 oder 2,
**dadurch gekennzeichnet, dass** mittig zwischen zwei Drehfederabschnitten (23) des Federelements (12) ein Federschenkel (24) angeordnet ist, welcher mit beiden Drehfederabschnitten (23) gekoppelt ist.

4. Kopfstütze (2) nach Anspruch 3,
**dadurch gekennzeichnet, dass** an der jeweiligen Außenseite der Drehfederabschnitte (23) jeweils ein Federende (25) angeordnet ist, wobei die Federenden (25) korrespondierend zu den Aussparungen (22) im Halteelement (5) ausgeformt sind.

5. Kopfstütze (2) nach Anspruch 3 oder 4,
**dadurch gekennzeichnet, dass** die Federenden (25) des Federelements (12) in den runden Aussparungen (22) des Halteelements (5) werkzeuglos anordenbar sind.

6. Kopfstütze (2) nach einem der vorherigen Ansprüche,
**dadurch gekennzeichnet, dass** ein Kopfstützengestell (16) mittels einer Klammer (13) schwenkbar am Haltelement (5) angeordnet ist, wobei die Klammer (13) das Halteelement (5) mit ihrem geschlossenen Abschnitt umschlingt und mit einer Schraube (14) am Kopfstützengestell (16) befestigt ist.

7. Kopfstütze (2) nach Anspruch 6,
**dadurch gekennzeichnet, dass** an der Rückseite des Kopfstützengestells (16) ein Abdeckelement (15) angeordnet ist.

8. Kopfstütze (2) nach Anspruch 7,
**dadurch gekennzeichnet, dass** in einem oberen Bereich des Abdeckelements (15) eine Haltenase (29) ausgeformt ist.

9. Kopfstütze (2) nach Anspruch 6 oder 7,
**dadurch gekennzeichnet, dass** in einem unteren Bereich des Abdeckelements (15) ein Stift (30) und zwei Rastnasen (31) ausgeformt sind.

10. Kopfstütze (2) nach den Ansprüchen 7, 8 und 9,
**dadurch gekennzeichnet, dass** das Abdeckelement (15) mittels der Haltenase (29), des Stiftes (30) und der Rastnasen (31) werkzeuglos am Kopfstützengestell (16) montierbar ist.

11. Kopfstütze (2) nach einem der vorherigen Ansprüche,
**dadurch gekennzeichnet, dass** die Kopfstütze (2) einen L-förmigen Querschnitt aufweist.

12. Kopfstütze (2) nach einem der vorherigen Ansprüche,
**dadurch gekennzeichnet, dass** das Halteelement (5) am oberen Ende (6) der Kopfstütze (2) schwenkbar mit dieser gekoppelt ist.

13. Kopfstütze (2) nach einem der vorherigen Ansprüche,
**dadurch gekennzeichnet, dass** ein unterer Bereich (8) der Kopfstütze (2) in Nichtgebrauchsposition signifikant über eine Vorderkante (9) der Sitzlehne (4) hinausragt.

14. Kopfstütze (2) nach einem der vorherigen Ansprüche,
**dadurch gekennzeichnet, dass** die Unterkante (10) der Kopfstütze (2) in Gebrauchsposition oberhalb einer Oberkante (7) der Sitzlehne (4) angeordnet ist.

## Claims

1. A head restraint (2) with a holding element (5) for a vehicle seat (1), wherein the head restraint (2) is arranged on a seat back (4) of the vehicle seat (1) so as to be height-adjustable in such a manner that it can be adjusted from a non-use position into a use position, wherein
the head restraint (2) is arranged in an inclination-adjustable manner on the holding element (5) which is formed from a U-shaped tubular section, the horizontally arranged section (19) of which forms the axis of rotation of the head restraint (2), wherein the head restraint (2) and the holding element (5) are coupled by means of a spring element (12) in such a manner that the head restraint (2) is acted upon by a pre-tensioning force of the spring element (12) and the pre-tensioning force produced in such a manner automatically rotates a lower edge (10) of the head restraint (2) in the direction of the holding element (5) as the head restraint (2) is transferred from the non-use position into the use position, **characterized in that** the spring element (12) engages in sections in a recess (22) arranged on both sides in the region of rounded portions (21) between the horizontally arranged section (19) and a vertical section (20) of the holding element (5).

2. The head restraint (2) as claimed in claim 1, **characterized in that** the spring element (12) is in the form of a double torsion spring.

3. The head restraint (2) as claimed in claim 1 or 2, **characterized in that** a spring leg (24) is arranged centrally between two torsion spring sections (23) of the spring element (12) and is coupled to the two torsion spring sections (23).

4. The head restraint (2) as claimed in claim 3, **characterized in that** in each case a spring end (25) is arranged on the respective outer side of the torsion spring sections (23), wherein the spring ends (25) are formed in a corresponding manner to the recesses (22) in the holding element (5).

5. The head restraint (2) as claimed in claim 3 or 4, **characterized in that** the spring ends (25) of the spring element (12) can be arranged in the round recesses (22) of the holding element (5) without a tool.

6. The head restraint (2) as claimed in any one of the preceding claims, **characterized in that** a head restraint frame (16) is arranged pivotably on the holding element (5) by means of a clip (13), wherein the clip (13) loops with the closed section thereof around the holding element (5) and is fastened to the head restraint frame (16) with a screw (14).

7. The head restraint (2) as claimed in claim 6, **characterized in that** a covering element (15) is arranged on the rear side of the head restraint frame (16).

8. The head restraint (2) as claimed in claim 7, **characterized in that** a holding lug (29) is formed in an upper region of the covering element (15).

9. The head restraint (2) as claimed in claim 6 or 7, **characterized in that** a pin (30) and two latching lugs (31) are formed in a lower region of the covering element (15).

10. The head restraint (2) according to claims 7, 8 and 9, **characterized in that** the covering element (15) can be fitted on the head restraint frame (16) by means of the holding lug (29), the pin (30) and the latching lugs (31) without a tool.

11. The head restraint (2) as claimed in any one of the preceding claims, **characterized in that** the head restraint (2) has an L-shaped cross section.

12. The head restraint (2) as claimed in any one of the preceding claims, **characterized in that** the holding element (5) is coupled pivotably to the head restraint (2) at the upper end (6) thereof.

13. The head restraint (2) as claimed in any one of the preceding claims, **characterized in that**, in the non-use position, a lower region (8) of the head restraint (2) protrudes significantly beyond a front edge (9) of the seat back (4).

14. The head restraint (2) as claimed in any one of the preceding claims, **characterized in that**, in the use position, the lower edge (10) of the head restraint (2) is arranged above an upper edge (7) of the seat back (4).

## Revendications

1. Appuie-tête (2) avec un élément de maintien (5) pour un siège de véhicule (1), dans lequel l'appuie-tête (2) est disposé sur un dossier (4) du siège de véhicule (1) de façon réglable en hauteur, de telle manière qu'il soit déplaçable d'une position de non-utilisation à une position d'utilisation, dans lequel l'appuie-tête (2) est disposé de façon réglable en inclinaison sur l'élément de maintien (5), qui est formé par une partie de tube en forme de U, dont la partie disposée horizontalement (19) forme l'axe de rotation de l'appuie-tête (2), dans lequel l'appuie-tête (2) et l'élément de maintien (5) sont couplés au moyen d'un élément de ressort (12), de telle manière que l'appuie-tête (2) soit soumis à une force de précontrainte de l'élément de ressort (12) et que la force de précontrainte ainsi produite fasse tourner un bord inférieur (10) de l'appuie-tête (2) automatiquement en direction de l'élément de maintien (5) lors d'un passage de l'appuie-tête (2) de la position de non-utilisation à la position d'utilisation, **caractérisé en ce que** l'élément de ressort (12) s'engage localement dans une découpe (22) disposée respectivement sur les deux côtés dans la région d'arrondis (21) entre la partie disposée horizontalement (19) et des parties verticales (20) de l'élément de maintien (5).

2. Appuie-tête (2) selon la revendication 1, **caractérisé en ce que** l'élément de ressort (12) est constitué par un double ressort de torsion.

3. Appuie-tête (2) selon la revendication 1 ou 2, **caractérisé en ce qu'**une branche de ressort (24) est disposée au milieu entre deux parties de ressort de torsion (23) de l'élément de ressort (12), et est couplée aux deux parties de ressort de torsion (23).

4. Appuie-tête (2) selon la revendication 3, **caractérisé en ce qu'**une extrémité de ressort (25) est chaque fois disposée sur le côté extérieur respectif des parties de ressort de torsion (23), dans lequel les extrémités de ressort (25) sont formées de façon correspondante aux découpes (22) dans l'élément de maintien (5).

5. Appuie-tête (2) selon la revendication 3 ou 4, **caractérisé en ce que** les extrémités de ressort (25) de l'élément de ressort (12) peuvent être agencées sans outil dans les découpes rondes (22) de l'élément de maintien (5).

6. Appuie-tête (2) selon l'une quelconque des revendications précédentes, **caractérisé en ce qu'**un châssis d'appuie-tête (16) est disposé de façon pivotante sur l'élément de maintien (5) au moyen d'une attache (13), dans lequel l'attache (13) entoure l'élément de maintien (5) avec sa partie fermée et est fixée au châssis d'appuie-tête (16) avec une vis (14).

7. Appuie-tête (2) selon la revendication 6, **caractérisé en ce qu'**un élément de recouvrement (15) est disposé sur le côté arrière du châssis d'appuie-tête (16).

8. Appuie-tête (2) selon la revendication 7, **caractérisé en ce qu'**un ergot de retenue (29) est formé dans une région supérieure de l'élément de recouvrement (15).

9. Appuie-tête (2) selon la revendication 6 ou 7, **caractérisé en ce qu'**une tige (30) et deux ergots d'encliquetage (31) sont formés dans une région inférieure de l'élément de recouvrement (15).

10. Appuie-tête (2) selon les revendications 7, 8 et 9, **caractérisé en ce que** l'élément de recouvrement (15) peut être monté sans outil sur le châssis d'appuie-tête (16) au moyen de l'ergot de retenue (29), de la tige (30) et des ergots d'encliquetage (31).

11. Appuie-tête (2) selon l'une quelconque des revendications précédentes, **caractérisé en ce que** l'appuie-tête (2) présente une section transversale en forme de L.

12. Appuie-tête (2) selon l'une quelconque des revendications précédentes, **caractérisé en ce que** l'élément de maintien (5) est couplé de façon pivotante à l'appuie-tête (2) à l'extrémité supérieure (6) de celui-ci.

13. Appuie-tête (2) selon l'une quelconque des revendications précédentes, **caractérisé en ce qu'**une région inférieure (8) de l'appuie-tête (2) dépasse fortement au-delà d'un bord antérieur (9) du dossier (4) dans la position de non-utilisation.

14. Appuie-tête (2) selon l'une quelconque des revendications précédentes, **caractérisé en ce que** le bord inférieur (10) de l'appuie-tête (2) est disposé au-dessus d'un bord supérieur (7) du dossier (4) dans la position d'utilisation.
